Europäisches Patentamt

European Patent Office

Office européen des brevets

(19)

(11) Veröffentlichungsnummer: **0 104 576**
**A2**

(12) **EUROPÄISCHE PATENTANMELDUNG**

(21) Anmeldenummer: **83109267.1**

(22) Anmeldetag: **19.09.83**

(51) Int. Cl.³: **H 04 B 9/00**

(30) Priorität: **23.09.82 DE 3235253**

(43) Veröffentlichungstag der Anmeldung:
**04.04.84 Patentblatt 84/14**

(84) Benannte Vertragsstaaten:
**CH DE FR GB LI**

(71) Anmelder: **SIEMENS AKTIENGESELLSCHAFT**
**Berlin und München Wittelsbacherplatz 2**
**D-8000 München 2(DE)**

(72) Erfinder: **Witte, Hans Hermann, Dr.**
**Hippelstrasse 15**
**D-8000 München 82(DE)**

(72) Erfinder: **Rohler, Manfred**
**Brucknerstrasse 13**
**D-8000 München 80(DE)**

(54) **Optisches Kopplernetzwerk zum Verkoppeln von mehreren Teilnehmersendern mit mehreren Teilnehmerempfängern mittels optischer Sternkoppler.**

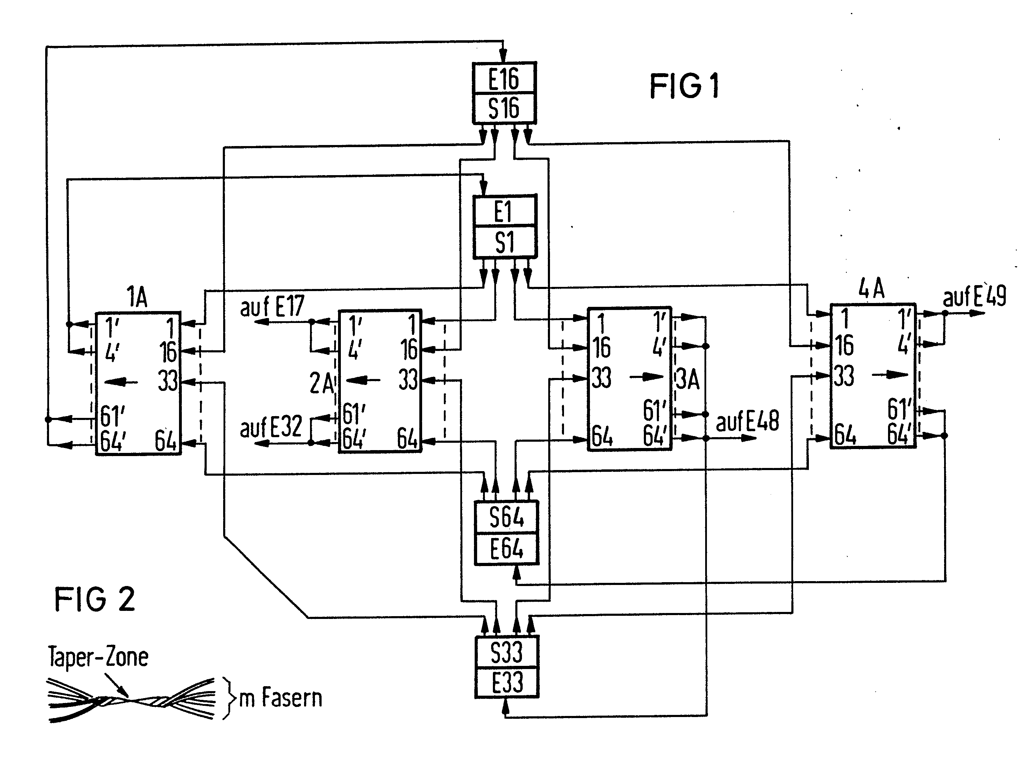

(57) Es wird ein Kopplernetzwerk zum Verkoppeln von N Teilnehmersendern (S1 bis S64) mit N (= n . m) Teilnehmerempfängern (E1 bis E64) beschrieben. Das System weist m Sternkoppler (1A bis 4A) mit jeweils N senderseitigen Eingangstoren (1 bis 64) zum Anschluß der N Teilnehmersender und mit jeweils N empfängerseitigen Ausgangstoren (1' bis 64') zum Anschluß von jeweils N/m Teilnehmerempfängern der N Teilnehmerempfänger auf. Zur Erniedrigung der Streckendämpfung dieses echofreien Kopplernetzwerkes ist jeder Teilnehmersender (S1 bis S64) mit mehreren Sternkoppler-Eingangstoren und ein Detektor eines jeden Sternkoppler-Empfängers (E1 bis E64) mit mehreren Sternkoppler-Ausgangstoren (1' bis 4', ..., 61' bis 64') verbunden. Zur Kopplung von mehreren Sternkoppler-Eingangstoren bzw. -Ausgangstoren an einen Teilnehmersender bzw. einen Detektor eines Teilnehmerempfängers ist eine Optik oder ein Fasertaper verwendet, die es ermöglichen, daß mehr Licht ein- oder ausgekoppelt werden kann, als bei Einzelfasern. In der Figur 1 ist der spezielle Fall N = 64, m = 4 dargestellt.

./...

EP 0 104 576 A2

FIG 1

SIEMENS AKTIENGESELLSCHAFT ·          Unser Zeichen
Berlin und München                    VPA 82 P 1833 E

Optisches Kopplernetzwerk zum Verkoppeln von mehreren
Teilnehmersendern mit mehreren Teilnehmerempfängern
mittels optischer Sternkoppler

Die vorliegende Erfindung betrifft gemäß dem Oberbegriff
des Patentanspruchs 1 ein optisches Kopplernetzwerk zum
Verkoppeln von mehreren Teilnehmersendern mit mehreren
Teilnehmerempfängern mittels optischer Sternkoppler.

Ein Koppelnetzwerk der genannten Art ist in der älteren
Patentanmeldung P 31 23 445.3 (VPA 81 P 7054 DE) vorgeschlagen. Bei diesem Kopplernetzwerk treten keine
"Echos", d.h. ständig umlaufende Datenpakete, auf, wie
dies bei hinsichtlich der Teilnehmerzahl vergleichbaren
Kopplernetzwerken mit nur einem Sternkoppler der Fall
ist. Das vorgeschlagene Kopplernetzwerk kann aber im
Vergleich zu Kopplernetzwerken mit nur einem Koppler
eine erheblich höhere Streckendämpfung aufweisen.

Aufgabe der Erfindung ist es, ein Kopplernetzwerk der
genannten Art zu schaffen, welches eine erniedrigte
Streckendämpfung aufweisen kann.

Diese Aufgabe wird durch die im kennzeichnenden Teil des
Patentanspruchs 1 angegebenen Merkmale gelöst.

Durch ein erfindungsgemäßes Kopplernetzwerk kann die
Streckendämpfung gegenüber einem Kopplernetzwerk mit nur
einem Sternkoppler erniedrigt werden, und zwar deshalb,
weil mehr von dem Licht, das ein Teilnehmersender abstrahlt, nutzbar gemacht werden kann.

Ed 1 Sti/22.09.1982

Bevorzugterweise besteht gemäß Anspruch 2 ein mit mehreren Sternkoppler-Eingangstoren verbundene Teilnehmersender aus einer lichtemittierenden Diode.

Eine Kopplung eines Teilnehmersenders oder auch Teilnehmerempfängers mit mehreren Sternkoppler-Eingangstoren bzw. Ausgangstoren nach Maßgabe des Anspruchs 3.

Bei Verwendung eines Tapers wird zweckmäßigerweise so vorgegangen, wie es im Anspruch 4 angegeben ist.

Ein erfindungsgemäßes echofreies Kopplernetzwerk, bei dem Teilnehmersender und auch Teilnehmeempfänger mit mehreren Sternkoppler-Eingangstoren bzw. -Ausgangstoren zu verbinden sind, geht aus Anspruch 5 hervor.

Eine bevorzugte Ausgestaltung dieses Kopplernetzwerkes ist im Anspruch 6 angegeben.

Eine vorteilhafte Ausgestaltung eines Kopplernetzwerkes nach Anspruch 5 oder 6 ist im Anspruch 7 angegeben. Diese Ausgestaltung ermöglicht die Reduzierung oder Begrenzung der Zahl der Eingangs- bzw. Ausgangstore der verwendeten Sternkopplern.

Die Erfindung wird anhand der Figuren in der folgenden Beschreibung näher erläutert. Von den Figuren zeigen

Figur 1 in schematischer Darstellung eine Ausführungsform eines erfindungsgemäßen Kopplernetzwerkes, und

Figur 2 eine Vorstufe eines bei dieser Ausführungsform zu verwendenden Tapers.

'In der in der Figur 1 dargestellten Ausführungsform sind N = 64 Teilnehmer auf m = 4 Sternkoppler verteilt. Von jedem Teilnehmersender S1 bis S64 führen jeweils m = 4 Lichtleitfasern auf ein Eingangstor jedes der m Koppler. Am Ausgang jedes der m Sternkoppler wird die Leistung aus m Ausgangstoren eines Sternkopplers, die in m Ausgangsfasern steckt, auf einen Detektor eines jeden Teilnehmerempfängers E1 bis E64 geführt. Man könnte auch alle N Teilnehmersender auf alle N Sternkoppler-Ausgangstore 1' bis 64' führen. Auch so führen wieder m Leitungen auf jeden Teilnehmerempfänger. Durch diese Anordnung könnten immer noch alle N Teilnehmer, bestehend aus Teilnehmersender und Teilnehmerempfänger, untereinander kommunizieren, auch wenn irgendein Koppler ausfällt; allerdings erhöht sich entsprechend der Zahl der Koppler-Ausfälle die Streckendämpfung. Das in Figur 1 dargestellte Netzwerk ist echofrei.

In dem in der Figur 1 gezeigten Beispiel koppeln jeweils N/m = 16 Teilnehmer über verschiedene Sternkoppler 1A bis 4A. Man kann nach diesem Prinzip natürlich auch die Zahl der Teilnehmer an einem Bus erhöhen. Man hat das System dann in vertikaler Richtung fortzusetzen, so daß Gruppen aus jeweils mehreren Sternkopplern übereinander oder in verschiedenen Ebenen angeordnet sind.

Wenn es beispielsweise aus technologischen Gründen nicht sinnvoll erscheint, einen einzelnen Sternkoppler mit mehr als N Ein- bzs. Ausgangstoren herzustellen, man jedoch beispielsweise 2N Teilnehmer über den Bus kommunizieren lassen möchte, so fügt man in vertikaler Richtung eine zweite Ebene mit jeweils zwei x 64-Tor-Sternkopplern an die erste, mit der Zeichenebene der Figur 1 übereinstimmenden Ebene an und erhöht die Anzahl der aus den Teilnehmersendern austretenden Fasern entsprechend.

Wäre beispielsweise N = 128 und m = 4, so könnten wiederum je 16 Teilnehmer über einen Sternkoppler mit 64 Ein- bzw. Ausgangstoren koppeln. Die Zahl der jeweils den Teilnehmersender verlassenden Fasern wäre dann 8.

Das Kopplernetzwerk nach Figur 2 ermöglicht es, bei Verwendung von LEDs (lichtemittierende Dioden) als Teilnehmersender eine niedrigere Streckendämpfung (Streckendämpfung ist das im logerithmischen Maß ausgedrückte Verhältnis zwischen der Gesamtleistung der LED und der am Detektor ankommenden Leistung) zu erzielen, gegenüber dem herkömmlichen Fall eines Netzwerks gleicher Teilnehmerzahl mit einem einzigen Sternkoppler, bei dem die Anzahl der Eingangs- bzw. Ausgangstore gleich der Zahl der Teilnehmer ist.

Das läßt sich dadurch erreichen, daß man bei der Kopplung zwischen LED und Lichtleitfaser eine Optik oder einen Taper verwendet. Bei Verwendung von Tapern bringt man die mehreren anzuschließenden Fasern entlang einer bestimmten Strecke in innigen mechanischen Kontakt und man erweicht dort die Fasern, während man gleichzeitig auseinanderzieht. Es bildet sich eine Zone sich verändernden Querschnitts aus, die sog. Taper-Zone (siehe beispielsweise Johnson et al, Appl. Phys. Lett. 35 (7), 1; 1979, S. 479). In der Figur 2 ist eine auf diese Weise erzeugte Taper-Zone angedeutet. Man durchtrennt die Taper-Zone an einer Stelle, wo der gewünschte Querschnitt vorliegt. Beim Übergang von der LED auf die mehreren Fasern sollte dieser Querschnitt nicht kleiner sein als die strahlende Fläche der Quelle. Beim Übergang der mehreren Fasern auf die Detektorfläche sollte der Durchmesser des Querschnitts einer z.B. runden Taper-Zone etwa gleich der Kantenlänge der empfindlichen Fläche des Detektors sein.

Der Taper-Winkel muß so ausgebildet werden, daß bei Anregung über die Taper-Stirnfläche das die Fasern des Bündels verlassende Licht einem geführten Modenspektrum entspricht.

Bei der Kopplung einer LED mit einer Einzelfaser über die ebene Faserstirnfläche werden nur wenige Prozent der gesamten von der LED abgestrahlten Leistung in die Faser eingekoppelt. Das liegt daran, daß das Produkt aus dem Querschnitt der LED und dem Quadrat des Sinus des Abstrahlwinkels der LED größer ist als das Produkt aus der Fläche einer Einzelfaser und dem Quadrat der numerischen Apertur der Faser. Verkleinert man durch eine Optik oder etwas äquivalentes, beispielsweise den vorstehend genannten Taper, das Winkelspektrum der LED auf das der numerischen Apertur der Faser entsprechende Winkelspektrum, so vergrößert sich das Abbild der strahlenden LED-Fläche gegenüber der strahlenden Fläche der LED. Wenn man annimmt, daß von einer LED in eine Faser 100µW eingekoppelt werden, so können von Streu- und Absorptions-

verlusten abgesehen, theoretisch 50 Fasern von einer Burrus-LED mit je 100 µW angeregt werden, weil die Gesamtstrahlung der LED mindestens 5 mW beträgt. Praktisch können etwa 10 Fasern mit je 100 µW angeregt werden. Wie man sich aus der Abbeisschen Sinusbedingung $\emptyset_{LED} \cdot \sin 60 = \emptyset'_{LED} \cdot \sin 12$ ableiten kann, muß sich der Durchmesser des Tapers eines verschmolzenen Bereichs des Faserbündels auf $\emptyset_{LED} = 200 \mu m$ aufweiten, wenn er an seiner engsten Stelle, die der Stirnfläche entspricht, welche der LED zugewandt ist, einen Durchmesser $\emptyset_{LED} = 50 \mu m$ hat, und der Abstrahlwinkel der LED $\pm 60°$ und die numerische Apertur der Faser 0,2 betragen. Wenn der Durchmesser der Fasern 140 µm beträgt, benötigt man also theoretisch nur zwei Fasern, um die LED-Strahlung gänzlich aufzufangen. Mit 10 Fasern fängt man erst recht alle LED-Strahlung auf. Man hat also beim Übergang zwischen einer LED und einem Faserbündel durch eine entsprechende Taperausbildung einen um etwa 20 dB niedrigeren Einkoppelverlust als bei der direkten Kopplung zwischen einer LED und einer Einzelfaser.

Weiterhin kann man erreichen, daß das Licht von vielen Fasern - bei den gängigen numerischen Aperturen der Fasern und einer lichtempfindlichen Detektorfläche von $1 \text{ mm}^2$ ist die Anzahl dieser Fasern größer als 50 - gleichzeitig auf die lichtempfindliche Fläche des Detektors abgebildet wird. Für Fasern mit 140 µm können schon etwa 50 Fasern direkt mit dem Detektor koppeln, wenn man die Fasern an ihrem einen Ende zu einem Stab verschmilzt und die Stirnfläche dieses Stabs direkt vor dem Detektor positioniert.

Statt die Leistung von mehreren benachbarten Ausgangstoren eines Kopplers auf einen Detektor zu führen,

**0104576**

kann man auch nicht benachbarte Ausgangstore eines
Kopplers verwenden. Dadurch erhöht man die Gleichmäßigkeit der Leistung an den Detektoren.

Das vorgeschlagene passive Kopplernetzwerk läßt sich auf
Teilnehmerzahlen von mehr als 100 erweitern.


8 Patentansprüche
2 Figuren

Patentansprüche

1. Optisches Kopplernetzwerk zum Verkoppeln von Teilnehmersendern mit Teilnehmerempfängern mittels optischer Sternkoppler, d a d u r c h g e k e n n z e i c h n e t , daß zumindest ein Teilnehmersender (S1, S2, ..., S64) mit mehreren SternkopplerEingangstoren (1, 2, ... bzw. 64) verbunden ist, oder auch daß zumindest ein Empfänger (E1, E2, ..., E64) mit mehreren Sternkoppler-Ausgangstoren (1' bis 4', ..., 61' bis 64') verbunden ist.

2. Kopplernetzwerk nach Anspruch 1, d a d u r c h g e k e n n z e i c h n e t , daß ein mit mehreren Sternkoppler-Eingangstoren verbundener Teilnehmersender (S1, S2, ..., S64) aus einer lichtemittierenden Diode besteht.

3. Kopplernetzwerk nach einem der vorhergehenden Ansprüche, d a d u r c h   g e k e n n z e i c h n e t , daß ein mit mehreren Sternkoppler-Eingangstoren bzw. -Ausgangstoren verbundener Teilnehmersender oder auch Teilnehmerempfänger durch mehrere Lichtleitfasern mit diesen Eingangs- bzw. Ausgangstoren verbunden ist, die über eine Optik oder einen Taper an den Teilnehmersender bzw. einen Detektor des Teilnehmerempfängers gekoppelt sind.

4. Kopplernetzwerk nach Anspruch 3, d a d u r c h g e k e n n z e i c h n e t , daß die mehreren Lichtleitfasern an einem Ende zu einem Taper verschmolzen sind, der eine Stirnfläche aufweist, die gegenüber der lichtemittierenden Fläche des Teilnehmersenders bzw. der Lichtempfangsfläche des Teilnehmerempfängers anzuordnen ist.

5. Kopplernetzwerk nach einem der vorhergehenden Ansprüche, d a d u r c h   g e k e n n z e i c h n e t , daß mehrere Teilnehmerempfänger (E12 bis E64) gruppenweise zusammengefaßt sind, daß für jede Gruppe (E1 bis E16; E17 bis E32; E33 bis E48; E49 bis E64) von Teilnehmerempfängern je ein optischer Sternkoppler (1A, 2A, 3A bzw. 4A) vorgesehen ist, daß jeder Sternkoppler Eingangstore (1 bis 64) zum Anschluß von mehreren Teilnehmersendern (S1 bis S64) und Ausgangstore (1' bis 4', 5' bis 8', ..., 61' bis 64') zum Anschluß der Teilnehmerempfänger (E1 bis E16; E17 bis E32;....bzw. E49 bis E64) der zugeordneten Gruppe von Teilnehmern aufweist, und daß jeder Teilnehmersender (S1 bis S64) mit zumindest einem Eingangstor (1, 2, ...bzw. 64) eines jeden der mehreren optischen Sternkoppler (1A bis 4A) verbunden ist.

6. Kopplernetzwerk nach Anspruch 5, d a d u r c h   g e k e n n z e i c h n e t , daß jeder Sternkoppler (1A bis 4A) pro Teilnehmersender (S1 bis S64) je ein Eingangstor (1 bis 64) und ebensoviele Ausgangstore (1' bis 64') aufweist, und daß jeweils mehrere dieser Ausgangstore mit einem Teilnehmerempfänger der dem Sternkoppler zugeordneten Gruppe von Teilnehmerempfängern verbunden ist.

7. Kopplernetzwerk nach Anspruch 5 oder 6, d a d u r c h   g e k e n n z e i c h n e t ,   daß mehrere Sternkoppler in räumlich getrennten Gruppen zusammengefaßt sind, die in verschiedenen Ebenen angeordnet sind.

8. Anwendung eines Kopplernetzwerkes nach einem der vorhergehenden Ansprüche in einem Datenbussystem für Führungs- und Waffeneinsatzsysteme, insbesondere an Bord von Schiffen oder Flugzeugen.

FIG 1

E16
S16

E1
S1

1A
1′
4′
1
16
33
61′
64′
64

auf E17

2A
1′
4′
1
16
33
61′
64′
64

auf E32

3A
1
16
33
64
1′
4′
61′
64′

auf E48

4A
1
16
33
64
1′
4′
61′
64′

auf E49

S64
E64

S33
E33

FIG 2

Taper-Zone

} m Fasern

1/1

0104576